# EUROPEAN PATENT APPLICATION

(11) **EP 1 586 803 A2**
(43) Date of publication of application: **19.10.2005**
(21) Application number: 05007963.1
(22) Date of filing: 12.04.2005
(51) Int. Cl.: F16M 11/04

(54) **Support device**

(30) Priority: 14.04.2004 IT VR20040013 U
(71) Applicant: Munari S.R.L., 37050 Ca'Degli Oppi - Oppeano (Prov. of Verona) (IT)
(72) Inventor: Munari, Daniele, 37050 Oppeano (Prov. of Verona) (IT)
(74) Representative: Modiano, Guido

(57) **Abstract**

A support device comprising a backplate (2), which can be fixed to a vertical wall (100) by way of anchoring means, and a supporting element (4), connection means (3) being provided comprising at least one connection element that comprises at least two connecting arms (5), which are connected one another and can be moved with respect to each other about a pivoting axis (101) that is substantially parallel, during use, to the vertical wall (100), the at least two connecting arms being associated, so that they can rotate about an axis (102) that is substantially parallel to the pivoting axis (101), respectively to the backplate (2) and to the supporting element substantially at their free end portions.

## Description

The present invention relates to a support device that can be fixed to walls or otherwise to vertical structures and is particularly adapted to support plasma television sets or similar apparatus.

Supports intended to be fixed to household walls are currently very widespread which are composed of a flat element, or backplate, which is designed to be arranged so that it faces the wall in order to be fixed thereto, for example by means of known anchoring elements such as so-called Fischer wall anchors.

Generally, a supporting arm is associated with the backplate in order to support an anchoring or supporting element for the apparatus to be supported, which can be constituted typically by a plasma television set or monitor. However, such anchoring or supporting element might also be constituted by a supporting shelf for items of various kinds.

In order to allow to reduce the space occupation of the support when the television set is not in use, the arm can rotate about a substantially vertical axis at its region for connection to the backplate.

It is in any case evident that notwithstanding this refinement it is not possible to completely fold the support against the wall.

Moreover, it has been found that in these cases, when the arm is folded, the plasma television set is arranged laterally with respect to the backplate, allowing to see such backplate, with obvious unaesthetic consequences.

The aim of the present invention is to eliminate or at least reduce drastically the drawbacks noted above in known types of supports.

Within this aim, another object of the present invention is to provide a support device which allows to achieve a very compact space occupation when not in use.

Another object of the invention is to provide a support device that allows to adjust simply and effectively the distance between the wall and the anchoring element.

Another object of the present invention is to provide a support device that has a very simple structure, is highly durable, easy to use, and competitive in terms of production cost, so that it is advantageous to use also from an economical standpoint.

This aim and these and other objects that will become better apparent hereinafter are achieved by a support device according to the invention, comprising a backplate that can be fixed to a vertical wall by way of anchoring means, and is characterized in that it comprises a supporting element for an apparatus to be supported, connection means being provided between said backplate and said supporting element and comprising at least one connection element that comprises at least two connecting arms, which are connected one another and can be moved with respect to each other about a pivoting axis that is substantially parallel, during use, to said vertical wall, said at least two connecting arms being associated, so that they can rotate about an axis that is substantially parallel to said pivoting axis, respectively to said backplate and to said supporting element substantially at their free end portions.

Advantageously, a support device according to the invention comprises two connecting elements.

Further characteristics and advantages of the invention will become better apparent from the description of some preferred but not exclusive embodiments of a support according to the invention, illustrated by way of non-limiting example in the accompanying drawings, wherein:

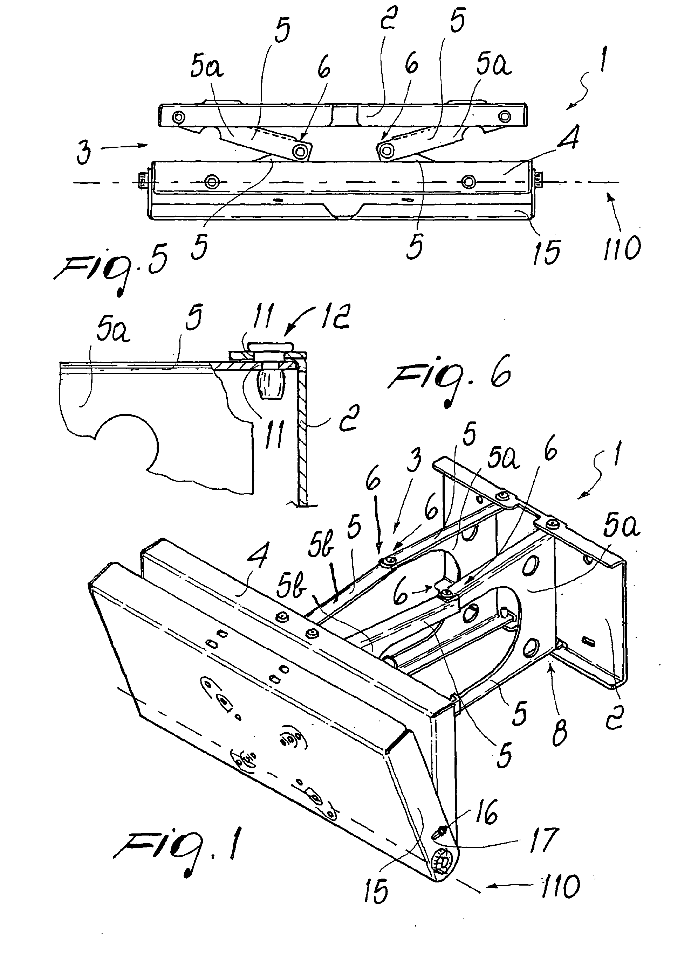

Figure 1 is a perspective view of a support device according to the present invention, in a first embodiment;

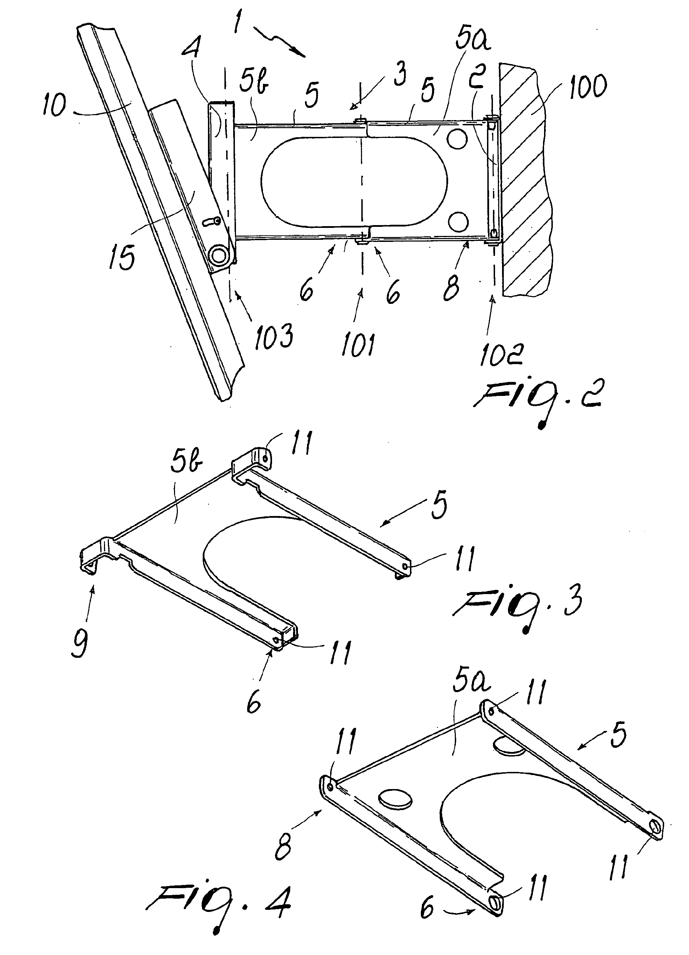

Figure 2 is a side elevation view of the support device shown in Figure 1;
Figure 3 is a perspective view of a connecting arm;

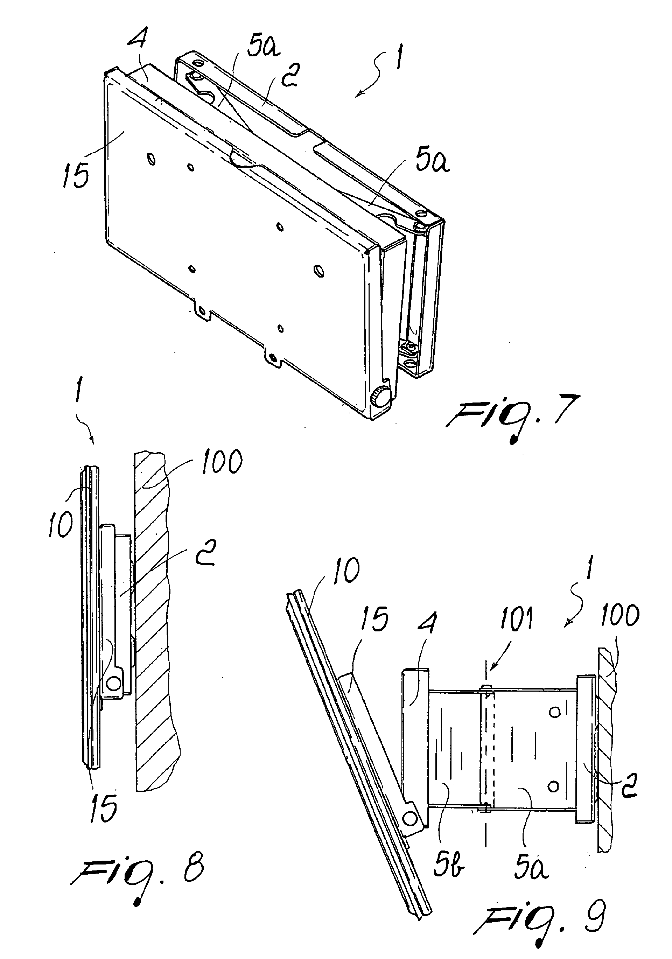

Figure 4 is a perspective view of a connecting arm;
Figure 5 is a top plan view of a support device according to the invention, in another embodiment;
Figure 6 is an enlarged-scale sectional view of the means for connecting one another the backplate and the connecting arm;
Figure 7 is a perspective view of the embodiment shown in Figure 5 in a partially folded condition;
Figure 8 is a side elevation view of the support device in a fully folded position; and
Figure 9 is a side elevation view of the support device in the extended position.

In the examples of embodiments that follow, individual characteristics, given in relation to specific examples, may actually be interchanged with other different characteristics that exist in other examples of embodiments.

Moreover, it is noted that anything found to be already known during the patenting process is understood not to be claimed and to be the subject of a disclaimer.

With reference to the figures, a support device, generally designated by the reference numeral 1, comprises a backplate 2, which can be fixed, by way of conventional anchoring means, which are not shown, to a vertical wall 100, such as for example a household wall.

According to the present invention, the backplate 2 is articulated, by way of connection means 3, to a supporting element 4 for an apparatus to be supported, which can be constituted for example, as shown in the figures, by a plasma television set 10.

The connection means 3 comprise at least one connecting element, which is constituted by at least two connecting arms 5, which are connected one another at a respective connecting end 6 and can be moved in an angular fashion with respect to each other about a pivoting axis 101 that is substantially parallel, during use, to the vertical wall 100.

According to a preferred embodiment shown in the figures, the connecting element can be constituted by a first connecting arm 5a and by a second connecting arm 5b.

The first connecting arm 5a is associated, so that it can rotate about an axis 102 (which is parallel to the pivoting axis 101), with the backplate 2 at its end portion 8 that lies opposite the end 6 for connection to the second connecting arm 5b.

Likewise, the second connecting arm 5b is connected so that it can rotate (about an axis 103) to the supporting element 4 substantially at the end portion 9 that lies opposite its connecting end 6.

Advantageously, the connection means 3 comprise two connecting elements, each of which is constituted by two connecting arms 5a and 5b.

Conveniently, the two connecting elements are arranged symmetrically with respect to a substantially vertical plane that is perpendicular to the vertical wall.

According to a preferred embodiment, the two connecting arms 5a and 5b respectively comprise a plate-like element, which in use is designed to lie on a substantially vertical plane, so as to ensure a high flexural rigidity.

The plate-like element has, at its longitudinal ends, respective connecting portions (for example constituted by holes 11), which are designed to be articulated, by means of a connecting hinge 12, to engagement portions, which are supported respectively by the backplate 2 and by the supporting element 4 or by means of connecting portions 11 supported by the other connecting arm 5.

Conveniently, the supporting element 4 is kinematically associated with an anchoring panel 15 for the apparatus 10 to be supported, and such anchoring panel 15 is movable in an angular fashion about at least one substantially horizontal axis 110 with respect to the supporting element 4.

In particular, it is possible to provide means for adjusting and locking the angular movement of the anchoring panel 15 with respect to the supporting element 4.

With reference to the figures, the adjustment and locking means can be constituted by one or more threaded pins 16, which are supported for example by the anchoring panel 15 and can slide within a respective guide 17, which lies along a portion of a circumference and is supported by the supporting element 4, and by a female thread element, which can engage the threaded pin 16 in order to lock by friction the sliding of the threaded pin 16 with respect to the respective guide 17.

Operation of the support according to the invention clearly appears from what has been described above.

In particular, the backplate 2 is fixed to the wall, for example by means of Fischer wall anchors, and then the apparatus to be supported (for example the television set 10) is anchored to the anchoring panel 15.

At this point (by applying a force to the supporting element) it is possible to fold or space said element with respect to the wall 100.

All the characteristics of the invention cited above as advantageous, convenient or the like may also be omitted or be replaced with equivalents.

The invention thus conceived is susceptible of numerous modifications and variations, all of which are within the scope of the appended claims.

Thus, for example, each one of the connecting elements 3 can have at least one linking arm between the two connecting arms 6 that are designed to be associated with the backplate 2 and with the supporting element 4 respectively.

In practice it has been found that the invention has achieved the intended aim and objects in all of the embodiments.

In particular, by using two symmetrically-arranged connecting elements, as shown in the two embodiments, it is possible to achieve a further reduction in space occupation when the supporting element is arranged proximate to the wall.

Moreover, in this position, the connecting elements are completely arranged inside the volume of the anchoring panel, so as to obtain an appreciable aesthetic result.

Moreover, it has been found that if the supporting element is to be inclined with respect to the vertical wall, it is possible to arrange the two connecting elements at mutually different angles.

In practice, the materials used, as well as the dimensions and shapes, may be any according to requirements.

All the details may further be replaced with other technically equivalent elements.

The disclosures in Italian Utility Model Application No. VR2004U000013 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A support device particularly but not exclusively for television sets or the like, comprising a backplate that can be fixed to a vertical wall by way of anchoring means, **characterized in that** it comprises a supporting element for an apparatus to be supported, connection means being provided between said backplate and said supporting element and comprising at least one connection element that comprises at least two connecting arms, which are connected one another and can be moved with respect to each other about a pivoting axis that is substantially parallel, during use, to said vertical wall, said at least two connecting arms being associated, so that they can rotate about an axis that is substantially parallel to said pivoting axis, respectively to said backplate and to said supporting element substantially at their free end portions.

2. The support device according to claim 1, **characterized in that** said connection means comprise two connecting elements.

3. The support device according to claim 2, **characterized in that** said two connecting elements are arranged symmetrically with respect to a substantially vertical plane that is perpendicular to said vertical wall.

4. The support device according to one or more of the preceding claims, **characterized in that** said at least one connecting element comprises at least one linking arm between said two connecting arms.

5. The support device according to one or more of the preceding claims, **characterized in that** said at least two connecting arms respectively comprise a plate-like element which during use is arranged on a substantially vertical plane and has, at its longitudinal ends, respective connecting portions adapted to be associated, by means of a connecting hinge, with engagement portions supported by said backplate and by said supporting element or with connecting portions supported by another connecting arm.

6. The support device according to one or more of the preceding claims, **characterized in that** said supporting element is kinematically associated with an anchoring panel for said apparatus to be supported so that it can move in an angular fashion about at least one substantially horizontal axis with respect to said supporting element.

7. The support device according to one or more of the preceding claims, **characterized in that** it comprises means for locking the angular movement of said anchoring panel with respect to said supporting element.
